# EUROPÄISCHE PATENTSCHRIFT

(11) **EP 1 496 287 B1**
(45) Veröffentlichungstag und Bekanntmachung des Hinweises auf die Patenterteilung: **29.11.2006**
(21) Anmeldenummer: 03015283.9
(22) Anmeldetag: 07.07.2003
(51) Int. Cl.: F16F 15/12

(54) **Antriebsstrang**
Drive line
Ligne de transmission

(43) Veröffentlichungstag der Anmeldung: 12.01.2005
(73) Patentinhaber: BorgWarner Inc., Auburn Hills MI 48326 (US)
(72) Erfinder: Strauss, Dietmar, 76703 Kraichtal (DE)
(74) Vertreter: Patentanwälte Westphal, Mussgnug & Partner

(56) Entgegenhaltungen:
- EP-A- 0 610 979
- EP-A- 1 176 339
- DE-A- 4 307 133
- DE-A- 10 115 454
- DE-A- 10 149 704
- US-A- 2 855 767
- US-A- 4 353 444
- US-A- 4 871 342
- US-B1- 6 536 575

## Beschreibung

Die Erfindung betrifft einen Antriebsstrang gemäß dem Oberbegriff des Anspruchs 1.

Die Erfindung bezieht sich auf einen Antriebsstrang an sich bekannter Art. Dieser Antriebsstrang umfasst eine mit einem Motor zu verbindenden Eingangswelle, ein mit dieser Eingangswelle verbundenes Schwungrad, ein mit diesem Schwungrad verbundenen Drehschwingungsdämpfer, eine mit Drehschwingungsdämpfer verbundene Kupplungsvorrichtung sowie wenigstens eine mit dieser Kupplungsvorrichtung verbundene Ausgangswelle.

Obwohl sich derartige Antriebsstränge dem Grunde nach bewährt haben, wurde festgestellt, dass die Kupplungsvorrichtung unter bestimmten Betriebsbedingungen klappert bzw. rasselt. Dies führt zum einen zu einem Geräuschverhalten, was allgemein unter der Bezeichnung "noise vibration harschness" (NVH) bekannt ist, zum anderen dass die Einzelteile der Kupplung des Getriebes verschleißen.

Darüber hinaus wurde in den Fällen, in denen die Ausgangswelle mit einem Getriebe verbunden ist, festgestellt, dass dieses Getriebe rasselt, was wiederum zur vorgenannten NVH und zum Verschleiß diverser Teile führt.

Aus der DE. 101 15 454 A1 ist es bekannt, eine Flexplatte zwischen Schwungmasse und Drehschwingungsdämpfer vorzusehen. In allen dort beschriebenen Ausführungsbeispielen mit Flexplatte zwischen Schwungmasse und Drehschwingungsdämpfer ist der Drehschwingungsdämpfer über eine Hirth-Verzahnung mit der Flexplatte verbunden, Bei der Verwendung einer Hirth-Verzahnung muss jedoch eine vergleichsweise komplizierte Vorrichtung zum Ausgleich eines axialen Versatzes vorgesehen sein. Diese besteht in einem der Ausführungsbeispiele in der Kopplung des Außenlamellenträgers der Kupplung und des Drehschwingungsdämpfers mittels einer Steckerzahnung, der Anordnung einer zusätzlichen Flexplatte zwischen Schwungmasse und Antriebswelle sowie einer besonderen Ausführung einer der Flexplatten.

Der Erfindung liegt nunmehr die Aufgabe zugrunde, einen Antriebsstrang der vorstehend genannten Art derart auszubilden und weiterzubilden, dass zum Einen die vorerwähnten Klapper- und/oder Rasselgeräusche nicht mehr auftreten und dass damit die Geräuschemission und der Verschleiß der Einzelteile der gesamten Anordnung deutlich reduziert werden und bei der zum Anderen das Abkopplungselement in einfacher Weise mit dem Drehschwingungsdämpfer verbunden ist.

Diese Aufgabe wird durch einen Antriebsstrang mit den Merkmalen des Anspruchs 1 erfindungsgemäß gelöst. Vorteilhafte Ausführungen und Weiterbildungen der Erfindung sind in den Unteransprüchen angegeben.

Die Erfindung basiert auf der Erkenntnis, dass durch die schwingungstechnisch feste Anbindung der Kupplung-Dämpfer-Einheit an das Getriebe nur rein rotatorische Schwingungen isoliert werden können. Diesen Schwingungen sind aber in der Realität aufgrund von Montagefehlern (z. B. Achsversatz) und Anregungen der mit dem Motor verbundenen Eingangswelle (welche in der Regel eine Kurbelwelle ist) Axial-, Taumel- und Radialschwingungen überlagert. Die vorhandene Verzahnung am Getriebeeingang sowie die Kontaktstellen zwischen Federn und Anschlusselementen (Flansch, Schalen) sind bei Drehmomentübertragungen unter Umfangslast so vorgespannt, dass über Reibschluss axiale Anregungen ungedämpft weitergegeben werden.

Dies führt einerseits zu den vorerwähnten Klapper- bzw. Rasselgeräuschen der Kupplung, andererseits zum Rasseln eines abtriebsseitig angeschlossenen Getriebes.

Es ist nunmehr vorgesehen, dass in dem Antriebsstrang zwischen dem Schwungrad und dem Drehschwingungsdämpfer ein Abkoppelungselement vorgesehen ist, welches einen Teil oder alle diese vorerwähnten Schwingungen dämpft sowie ggf. radiale Versätze kompensiert. Je nach konkretem Anwendungsfall ist es ausreichend, nur die Axialschwingungen oder nur die Taumelschwingungen oder nur die Radialschwingungen auszublenden. Es ist häufig jedoch auch notwendig, alle diese Schwingungen gegebenenfalls auch in unterschiedlichem Maße auszublenden.

Es ist weiter vorgesehen, das Abkoppelungselement im Wesentlichen drehfest mit dem Drehschwingungsdämpfer zu verbinden. Am einfachsten lässt sich dies dadurch bewerkstelligen, dass das Abkoppelungselement über eine Steckverzahnung mit diesem Drehschwingungsdämpfer verbunden ist. Dabei ist eine verzahnte Nabe vorgesehen, die wahlweise einstückig mit dem Abkoppelungselement ausgeführt ist oder als Zusatzteil mit dem Abkoppelungselement fest verbunden sein kann. Die Verzahnung dieser verzahnten Nabe greift nunmehr in eine Eingangsverzahnung des integrierten Drehschwingungsdämpfers ein.

Je nach Art der vorzugsweise auftretenden Schwingungen kann das Abkoppelungselement unterschiedlich gestaltet sein. Eine besonders einfache Ausführungsvariante besteht darin, das Abkoppelungselement im Wesentlichen scheiben- oder ringförmig auszubilden. Derartige Abkoppelungselemente sind bereits im Automat-Bereich unter der Bezeichnung Flexplate oder Biege-/Taumelweichscheibe bekannt, wo sie zwischen Motor und Wandler angeordnet sind.
In besonderer Ausgestaltung dieser Ausführungsvariante ist vorgesehen, dass die eingangsseitige Anbindung am Außenrand des Abkoppelungselements und die ausgangsseitige Anbindung an dessen Innenrand realisiert ist. Die dämpfende, federnde Wirkung des Abkoppelungselementes ergibt sich somit aufgrund der Biege-/Taumelweichheit der Scheibe bzw. des Rings. Die für den jeweiligen Anwendungszweck optimale Biege-/Taumelweichheit der Scheibe/ des Rings wird durch Auswahl der Materialart, der Materialdicke und -behandlung sowie die Vorgabe der geometrischen Form, insbesondere der Kontur der Scheibe in Draufsicht, festgelegt. Gleichzeitig wird eine gewisse radiale Weichheit erreicht.

Erfindungsgemäß ist vorgesehen, dass das Abkoppelungselement dem Schwungrad drehfest verbunden ist. In diesem Fall erfolgt die Einleitung eines Drehmoments formschlüssig.

Eine drehfeste Verbindung lässt sich insbesondere dadurch realisieren, dass das Schwungrad mit dem Abkoppelungselement vernietet oder verschraubt ist. Derartige Befestigungseinrichtungen sind auf dem einschlägigen Gebiet wohlbekannt und daher ohne größeren Aufwand implementierbar.

Alternativ kann ein Drehmoment auch reibschlüssig eingeleitet werden. In diesem Fall ist erfindungsgemäß vorgesehen, dass das Abkoppelungselement mit dem Schwungrad reibschlüssig verbunden ist. Vorzugsweise wird eine reibschlüssige Verbindung dadurch realisiert, dass das als Scheibe oder als Ring ausgebildete Abkoppelungselement außenrandseitig gegen die Anpresskraft einer Feder, insbesondere einer Tellerfeder, gegen das Schwungrad verspannt ist. Eine derartige reibschlüssige Anbindung erlaubt die Integration eines Überlastschutzes (Rutschkupplung).

Eine weitere Ausführungsvariante der Erfindung sieht vor, das Abkoppelungselement federelastisch mit dem Schwungrad zu verbinden. Eine derartige Verbindung kann beispielsweise mittels einer oder mehrerer Blattfedern erfolgen, welche jeweils einendseitig mit dem Abkoppelungselement und andernendseitig mit dem Schwungrad verbunden ist.

Eine vorteilhafte Ausführungsvariante eines vorzugsweise ringförmigen Abkoppelungselements zur Dämpfung von Axialschwingungen und/oder Taumelschwingungen und/oder Radialschwingungen und/oder zur Kompensation radialer Versätze in einem Antriebsstrang umfasst mehrere in Umfangsrichtung nebeneinander liegende Funktionsöffnungen. Diese Funktionsöffnungen können entweder eingestanzt oder eingefräst sein. Abhängig von der Größe, der Anordnung sowie der Form der eingebrachten Funktionsöffnungen kann die Biege-/Taumelweichheit sowie die radiale Weichheit des Abkopplungselements eingestellt werden.

In einer ersten Alternativvariante weisen die Funktionsöffnungen eine längliche Gestalt auf, welche im Wesentlichen in Umfangsrichtung verläuft. Die kreisförmige Geometrie der Scheibe kann dabei die Längserstreckung der Funktionsöffnungen vorgeben. Diese Ausführungsvariante weist eine vergleichsweise hohe Biege-/Taumelweichheit, jedoch eine geringe radiale Weichheit auf.

Eine Alternativvariante sieht vor, dass die Funktionsöffnungen eine längliche Gestalt aufweisen, welche im Wesentlichen radial nach außen verläuft. Diese Variante weist eine vergleichsweise große radiale Weichheit, demgegenüber eine geringere Biege-/Taumelweichheit auf.

Eine weitere Variante der Erfindung sieht vor, dass die Funktionsöffnungen eine längliche Gestalt aufweisen, welche entgegen der Drehrichtung geneigt nach außen verläuft. Diese Variante weist eine mittlere Biege-/Taumelweichheit sowie eine mittlere radiale Weichheit auf.

Eine Weiterbildung dieser Variante sieht vor, dass die Funktionsöffnungen außenumfangsseitig offen sind. Bei dieser Variante wird sowohl die Biege-/Taumelweichheit als auch die radiale Weichheit signifikant erhöht.

Erfindungsgemäß ist vorgesehen, dass die vorzugsweise ringförmigen Abkoppelungselemente der vorstehend genannten Art außenumfangsseitig Fixieröffnungen aufweisen. Diese Fixieröffnungen ermöglichen eine formschlüssige Verbindung des (ringförmigen) Abkoppelungselementes mit dem Schwungrad beispielsweise mit Hilfe einer Vernietung. Es ist dem Fachmann unmittelbar einsichtig, dass die Biege-/Taumelweichheit sowie die radiale Weichheit über die Anordnung der Funktionsöffnungen in Bezug auf diese Fixieröffnungen zusätzlich in gewissem Rahmen variiert werden kann. So wird beispielsweise die Biege-/Taumelweichheit verringert, wenn die vorerwähnten Funktionsöffnungen und Fixieröffnungen radial hintereinander liegend angeordnet sind, wohingegen die Biege-/Taumelweichheit erhöht wird, wenn die jeweiligen Fixieröffnungen in radialer Richtung versetzt zueinander angeordnet sind.

Eine besonders vorteilhafte Ausführungsvariante eines (ringförmigen) Abkoppelungselements der vorstehend angegebenen Art ergibt sich dadurch, dass innenumfangsseitig eine verzahnte Nabe vorgesehen ist, welche drehfest mit der dem (ringförmigen) Abkoppelungselement verbunden ist. Diese Ausführungsvariante ermöglicht eine einfache Anbindung an den vorerwähnten Drehschwingungsdämpfer, wenn dieser eine entsprechende Eingangsverzahnung aufweist.

Die drehfeste Verbindung der Nabe mit dem ringförmigen Abkoppelungselement kann dadurch realisiert sein, dass diese einstückig mit dem ringförmigen Abkoppelungselement ausgebildet ist oder dass die verzahnte Nabe als Zusatzteil ausgeführt ist.

Die optimale Biege-/Taumelweichheit des ringförmigen Abkoppelungselements kann auch durch die Wahl eines geeigneten Materials festgelegt werden. Als Materialien kommen jegliche Tellerfedermaterialien und Federstähle in Betracht.

Weiterhin kann die optimale Biege-/Taumelweichheit sowie die radiale Weichheit auch durch die Dicke des Abkoppelungselements selbst festgelegt werden.

Eine weitere Möglichkeit zur Festlegung der optimalen Biege-/Taumelweichheit sowie der radialen Weichheit der Scheibe besteht in der Auswahl einer geeigneten Materialbehandlung.

Die Erfindung wird nunmehr anhand der nachfolgenden Zeichnungsfiguren näher beschrieben. Es zeigen:
- Figur 1 :: einen Antriebsstrang, bei dem gemäß der Erfindung zwischen dem Schwungrad und dem Drehschwingungsdämpfer ein ringförmiges Abkoppelungselement angeordnet ist, wobei das Abkoppelungselement antriebsseitig mit dem Schwungrad vernietet ist und abtriebsseitig über eine verzahnte Nabe mit der Eingangsverzahnung des Drehschwingungsdämpfers verbunden ist,
- Figur 2 :: einen Antriebsstrang, bei dem gemäß der Erfindung zwischen dem Schwungrad und dem Drehschwingungsdämpfer ein ringförmiges Abkoppelungselement angeordnet ist, wobei das Abkoppelungselement antriebsseitig durch Einspannung des Außenrandes mittels einer Tellerfeder-Vorspannung reibschlüssig mit dem Schwungrad verbunden ist und abtriebsseitig über eine verzahnte Nabe mit der Eingangsverzahnung des Drehschwingungsdämpfers verbunden ist,
- Figur 3 :: ein erstes Ausführungsbeispiel eines erfindungsgemäßen Abkoppelungselements,
- Figur 4 :: ein zweites Ausführungsbeispiel einer erfindungsgemäßen Abkoppelungselements,
- Figur 5 :: ein drittes Ausführungsbeispiel einer erfindungsgemäßen Abkoppelungselements,
- Figur 6 :: ein viertes Ausführungsbeispiel einer erfindungsgemäßen Abkoppelungselements,
- Figur 7 :: ein fünftes Ausführungsbeispiel einer erfindungsgemäßen Abkoppelungselements.
- Figur 8 :: einen Antriebsstrang, bei dem gemäß der Erfindung zwischen dem Schwungrad und dem Drehschwingdämpfer ein ringförmiges Abkoppelungselement angeordnet ist, wobei das Abkoppelungselement antriebsseitig über mehrere Blattfedern mit dem Schwungrad verbunden ist und abtriebsseitig über eine verzahnte Nabe mit der eingangsverzahnung des Drehschwingdämpfers verbunden ist.
- Figur 9 :: ein sechstes Ausführungsbeispiel eines erfindungsgemäßen Abkoppelungselemente, und dessen Anbindung in einem Antriebsstrang gemäß der Figur 8.

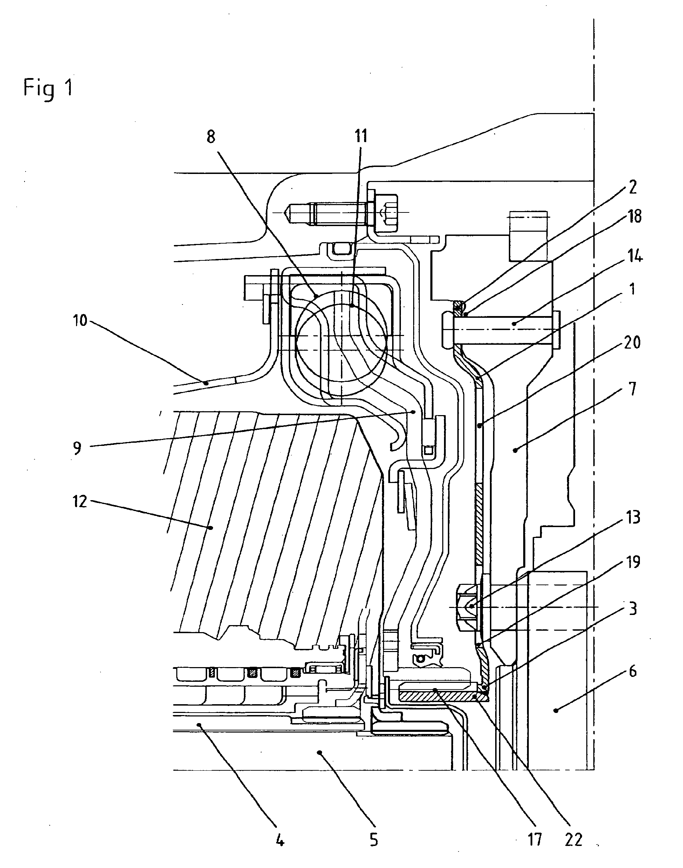

Die beiden Figuren 1, 2 und 8 zeigen Antriebsstränge, bei denen erfindungsgemäß Abkoppelungselemente vorgesehen sind, welche zur Dämpfung von Axialschwingungen und/oder Taumelschwingungen und/oder Radialschwingungen und/oder zur Kompensation von radialen Versätzen dienen sollen. In den beiden Zeichnungsfiguren sind identische Elemente mittels identischer Bezugszeichen versehen.

Die in den Figuren 1, 2 und 8 dargestellten Antriebsstränge weisen folgende Elemente in Übereinstimmung auf:

Die Eingangswelle des Antriebsstrangs wird durch die Kurbelwelle 6 gebildet, welche mit einem hier nicht dargestellten Verbrennungsmotor verbunden ist. Die Kurbelwelle 6 trägt ein Schwungrad 7 an sich bekannter Art. Die drehfeste Verbindung zwischen der Kurbelwelle 6 und dem Schwungrad 7 wird durch mehrere auf einem gedachten koaxialen Ring angeordnete Schrauben 13 fixiert.

Das Schwungrad 7 ist in den Antriebssträngen gemäß den Figuren 1, 2 und 8 über entsprechende nachfolgend beschriebene Abkoppelungselemente 1 mit der ersten Halbschale 9 eines Drehschwingungsdämpfers 8 an sich bekannter Bauart verbunden. Die zweite Halbschale 10 des Drehschwingungsdämpfers 8 bekannter Bauart, welche über eine Mehrzahl außenumfangsseitig angeordnete Federpakete 11 drehschwingungsdämpfend mit der ersten Halbschale 9 verbunden ist, ist mit einem nicht dargestellten Innenlamellenträger einer Lamellenkupplung 12 drehfest verbunden.

Bei dieser Lamellenkupplung 12 handelt es sich um eine sogenannte Doppellamellenkupplung, welche einen mit einer ersten Getriebeeingangswelle 4, vorliegend einer Hohlwelle 4, verbundenen Außenlamellenträger sowie einen zweiten mit einer zweiten Getriebeeingangswelle 5, vorliegend einer Zentralwelle 5, verbundenen Außenlamellenträger aufweist. Genauso gut könnte hier jedoch auch eine einfache Kupplungsvorrichtung Verwendung finden, bei der lediglich ein Außenlamellenträger mit zugeordneter Getriebeeingangswelle vorhanden ist.

In den Ausführungsbeispielen gemäß den Figuren 1, 2 und 8 ist das entsprechende Abkoppelungselement 1 ringförmig ausgebildet. Weiterhin erfolgt in allen drei Fällen die eingangsseitige Anbindung am Außenrand 2 des jeweiligen Abkoppelungselements 1 und die ausgangsseitige Anbindung an dessen Innenrand 3.

In allen drei Fällen besteht eine drehfeste Verbindung des Innenrandes 3 des Abkoppelungselements 1 mit dem Drehschwingungsdämpfer 8. Dies ist in allen drei Fällen dadurch realisiert, dass eine als Zusatzteil ausgebildete verzahnte Nabe 22 am Innenrand 3 des jeweiligen Abkoppelungselements 1 drehfest befestigt ist. Die Außenverzahnung dieser Nabe 22 greift in eine korrespondierende Innenverzahnung einer mit der ersten Halbschale 9 des Drehschwingungsdämpfers 8 drehfest verbundenen Nabe in der Art einer Steckverzahnung 17 ein.

Die außenumfangsseitige Anbindung des Abkoppelungselementes 1 an das Schwungrad 7 ist in den vorstehend genannten Ausführungsbeispielen unterschiedlich ausgeführt.

In dem Ausführungsbeispiel gemäß der Figur 1 weist das Abkoppelungselement 1 in der Nähe des Außenrandes 2 in Umfangsrichtung hintereinander liegend eine Vielzahl von Fixieröffnungen 18 auf. Diese Fixieröffnungen 18 dienen zur Aufnahme von Nieten 14, welche eine drehfeste Fixierung des Abkoppelungselements 1 an dem Schwungrad 7 erlauben.

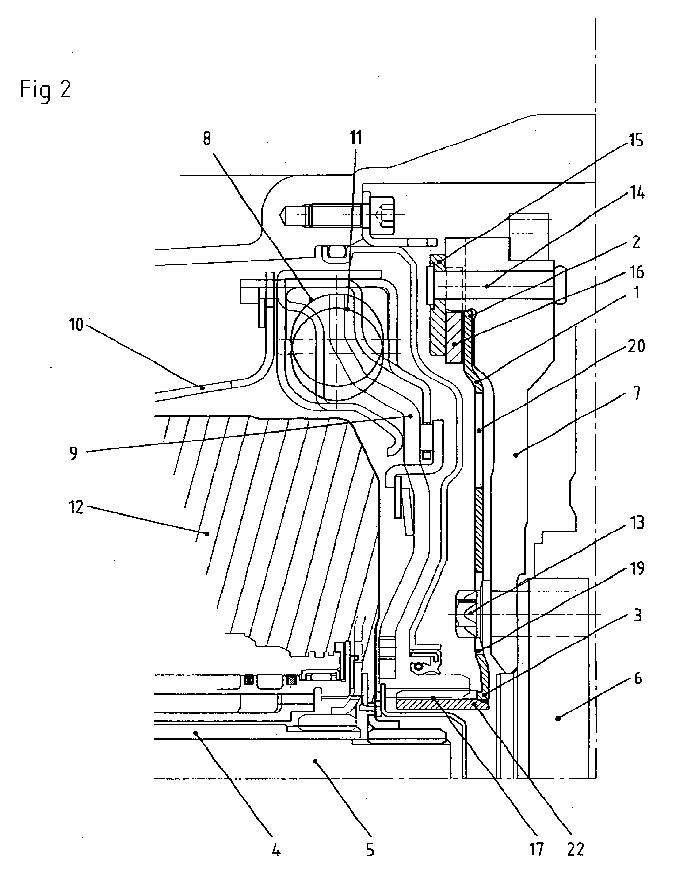

In dem Ausführungsbeispiel gemäß der Figur 2 ist ebenfalls eine Vernietung 14 vorgesehen. Diese Vernietung 14 dient jedoch in diesem Fall zur Fixierung eines Rings 15 an dem Schwungrad 7. Dieser Ring 15 ist ebenso wie das ringförmige Abkoppelungselement 1 koaxial zur Eingangs- und Ausgangswellenachse ax angeordnet, wobei die Innenseite des Rings 15 und die Außenseite des Abkoppelungselementes 1 teilweise überlappen. Der Ring 15 und das Abkoppelungselement 1 sind in axialer Richtung derart versetzt angeordnet, dass zwischen diesen im Überlappungsbereich eine Tellerfeder 16 Platz findet. Auf diese Weise ist der Außenrand 2 des Abkoppelungselements 1 reibschlüssig gegen die Kraft der Tellerfeder 16 mit dem Schwungrad 7 verspannt. Die Vorspannung der Tellerfeder 16 ist dabei vorzugsweise so gewählt, dass eine reibschlüssige Verbindung zwischen Schwungrad 7 und Abkoppelungselement 1 hergestellt ist, solange keine Überlast besteht. Bei Überlast ist ein Verdrehen des Abkoppelungselements 1 gegenüber dem Schwungrad 7 nach dem Prinzip einer Rutschkupplung möglich.

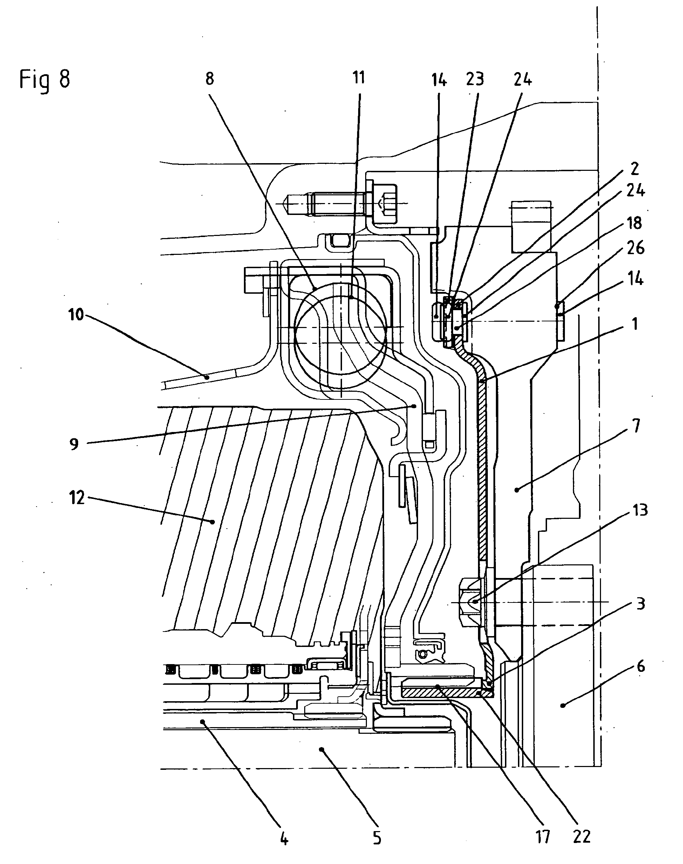

In dem Ausführungsbeispiel gemäß der Figur 8 weist das Abkoppelungselement 1 in der Nähe des Außenrandes 2 in Umfangsrichtung hintereinander liegend eine Vielzahl von Fixieröffnungen 18 auf. Diese Fixieröffnungen 18 dienen zur Aufnahme von Nieten 24, welche eine Fixierung des Abkoppelungselements 1 erlauben.

Im Gegensatz zum Ausführungsbeispiel gemäß der Figur 1 ist hier das Abkopplungselement 1 nicht unmittelbar über entsprechende Fixieröffnungen 26 in dem Schwunrad 7 mit dem Schwungrad 7 vernietet. Vielmehr erfolgt hier eine Koppelung vom Schwungrad 7 mit dem Abkoppelungselement 1 über Blattfedern 23.

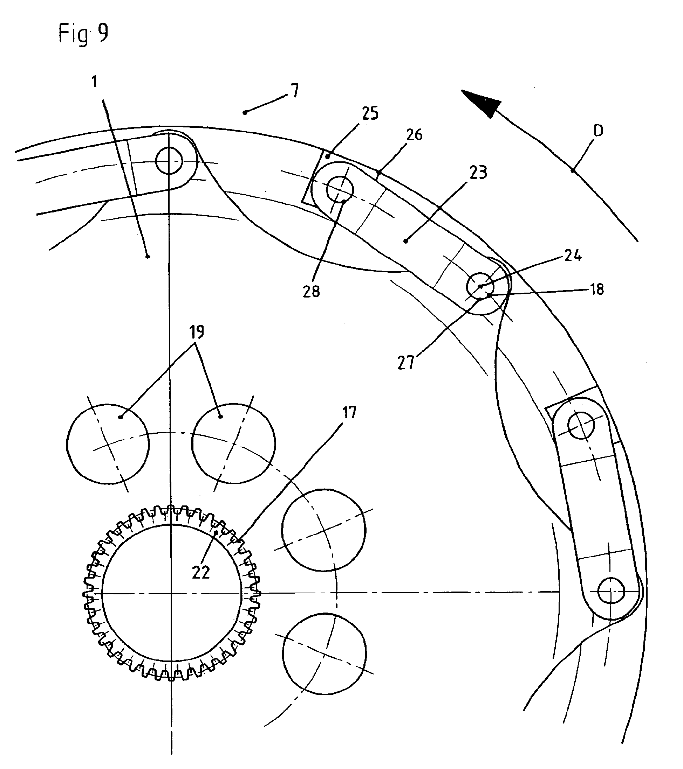

Konkret ist entsprechend der Zahl der Fixieröffnungen 18 im Abkoppelungselement 1 eine entsprechende Anzahl von Blattfedern 23 vorhanden. Diese Blattfedern 23 weisen jeweils beidendseitig Fixieröffnungen 27, 28 auf. Jede Blattfeder 23 ist einendseitig über korrespondierende Fixieröffnungen 18, 27 mit dem Abkopplungselement 1 und anderenendseitig über korrespondierende Fixieröffnungen 26, 28 mit dem Schwungrad 7 verbunden (vgl. Fig. 9).

Im vorliegenden Fall befinden sich die Fixieröffnungen 26 in entsprechenden am Schwungrad 7 angebrachten Bügeln 25. Selbstverständlich kann auch eine abweichende Ausgestaltung des Schwungrads 7 eine Anbindung von Blattfedern 23 erlauben.

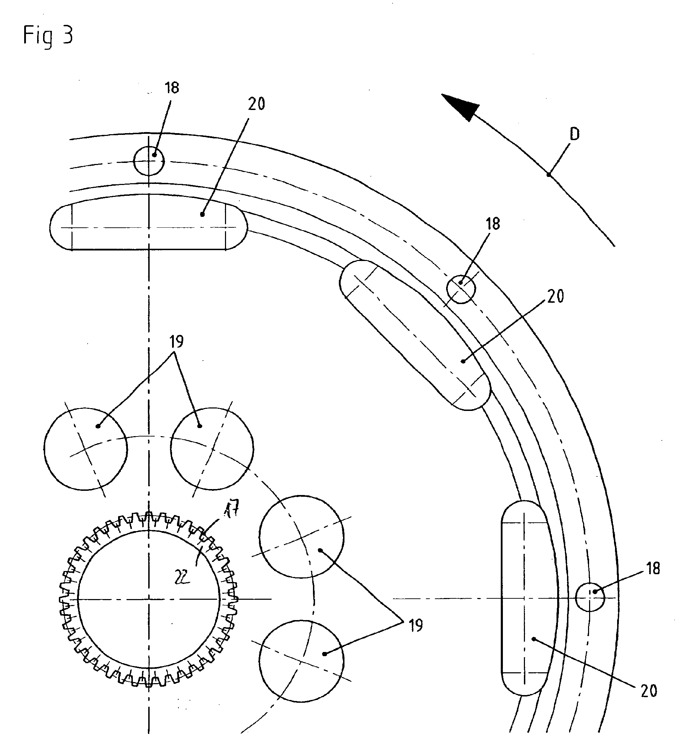

Die Figuren 3 bis 7 zeigen unterschiedliche Ausführungsbeispiele für Abkoppelungselemente 1, wie sie beispielsweise bei dem Antriebsstrang gemäß der Figur 1 Anwendung finden können. Alle in den vorerwähnten Figuren dargestellten Abkoppelungselemente 1 sind in der Art einer biege-/taumelweichen Scheibe ausgeführt.

Die biege-/taumelweiche Scheibe 1 gemäß der Figur 3 weist außenumfangsseitig zwölf äquisistant angeordnete Fixieröffnungen 18 auf. In gleicher Anzahl sind auch Funktionsöffnungen 20 vorgesehen, welche in Bezug auf diese Fixieröffnungen 18 radial innenliegend angeordnet sind. Die Funktionsöffnungen 20 weisen eine längliche Gestalt auf. Die Längserstreckung verläuft dabei im Wesentlichen in Umfangsrichtung. Weiterhin in radialer Richtung innerhalb dieser Funktionsöffnungen 20 befinden sich weitere zwölf im Wesentlichen kreisrunde Durchführöffnungen 19. Diese Öffnungen 19 dienen lediglich dem Zweck, dass das Schwungrad 7 mit der Kuppelwelle 6 mittels Schrauben 13 befestigt werden kann.

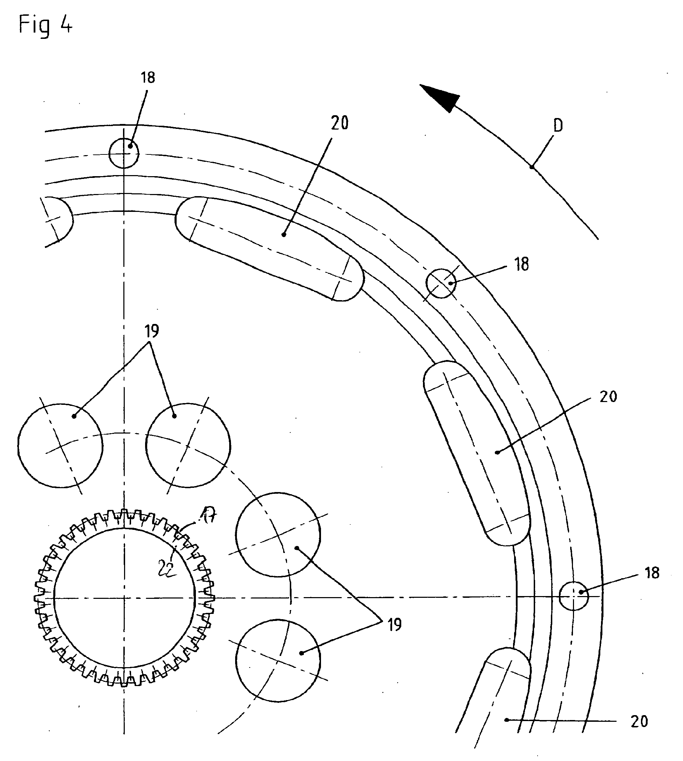

Die in der Figur 4 dargestellte Ausführungsvariante einer biege-/taumelweichen Scheibe 1 unterscheidet sich von der vorstehend beschriebenen Ausführungsvariante gemäß der Figur 3 lediglich dadurch, dass die Funktionsöffnungen 20 in Umfangsrichtung gegenüber den Fixieröffnungen 18 versetzt angeordnet sind.

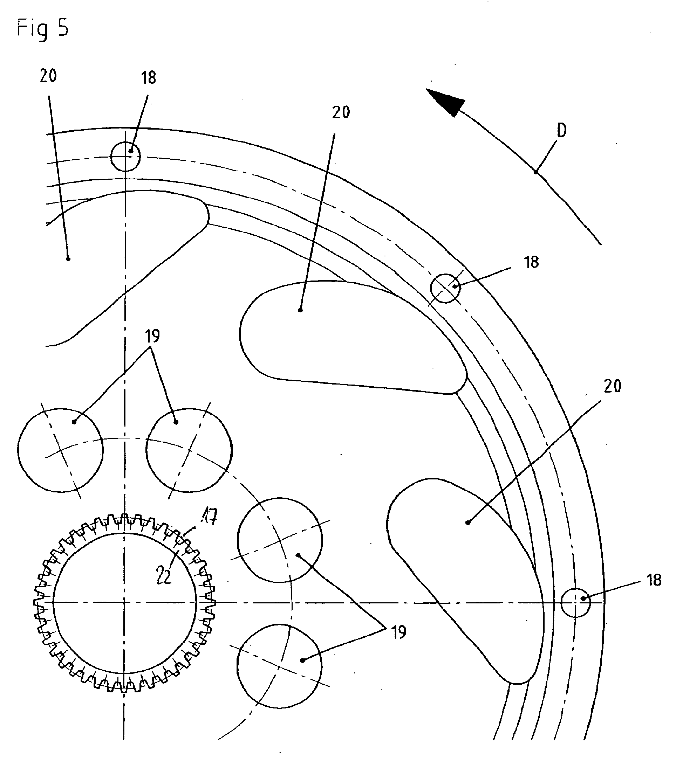

Bei der in der Figur 5 dargestellten Ausführungsvariante verläuft die Längserstreckung der Funktionsöffnungen 20 entgegen der Drehrichtung D geneigt nach außen.

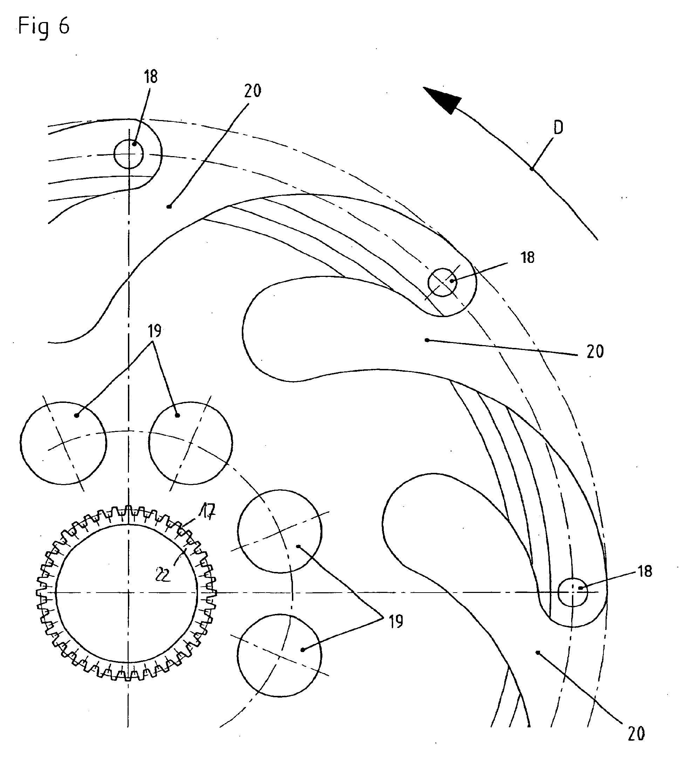

Die in der Figur 6 gezeigte Ausführungsvariante stellt eine Weiterbildung der Ausführungsvariante gemäß der Figur 5 dar. Bei dieser Ausführungsvariante sind die Funktionsöffnungen 20 ebenfalls entgegen der Drehrichtung D geneigt nach außen verlaufend. Die Funktionsöffnungen 20 sind hierbei jedoch außenumfangsseitig offen. Das Abkoppelungselement 1 weist in diesem Fall keine strenge ringförmige Gestalt mehr auf, sondern ist eher in der Art einer Verzahnung ausgebildet. Die Enden der einzelnen Zähne tragen hierbei die vorher erwähnten Fixieröffnungen 18, welche eine Fixierung des Abkoppelungselementes 1 mit dem Schwungrad 7 mittels einer Vernietung 14 ermöglichen.

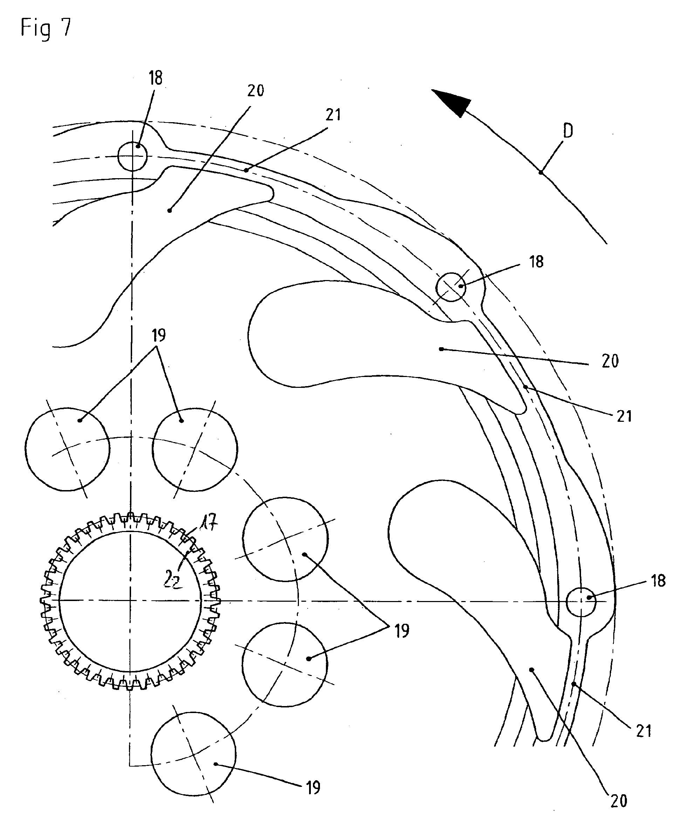

Einer Weiterbildung dieser Variante ist in der Figur 7 gezeigt. Hier sind die äußeren Enden der vorbeschriebenen Zähne durch Verbindungsstege 21 miteinander verbunden.

Das Abkoppelungselement 1 gemäß der Figur 9, welches sich insbesondere zum Einsatz in einen in Figur 8 dargestellten Antriebsstrang eignet, weist außenumfangseitig zwölf äquidistant angeordnete Fixieröffnungen 18 auf. Diese Fixieröffnungen 18 befinden sich in den Zacken des sternförmig ausgebildeten Abkoppelungselements 1.

Radial innenliegend und mittig zwischen jeweils zwei Zacken des sternförmigen Abkoppelungselements 1 befinden sich die vorstehend beschriebenen Durchführöffnungen 19. Weiterhin dargestellt ist auch die Nabe 22 mit deren Außenverzahnung 17.

### Bezugszeichenliste

- 1: Abkoppelungselement
- 2: Außenrand
- 3: Innenrand
- 4: erste Getriebeeingangswelle (Hohlwelle)
- 5: zweite Getriebeeingangswelle (Zentralwelle)
- 6: Antriebswelle (Kurbelwelle)
- 7: Schwungrad
- 8: Drehschwingungsdämpfer
- 9: erste Halbschale des Drehschwingungsdämpfers 8
- 10: zweite Halbschale des Drehschwingungsdämpfers 8
- 11: Federpaket
- 12: Lamellenkupplung
- 13: Schraube
- 14: Niete
- 15: Ring
- 16: Tellerfeder
- 17: Steckverzahnung
- 18: Fixieröffnung
- 19: Durchführöffnung
- 20: Funktionsöffnung zur Erzeugung der Biege-/Taumel-/radialen Weichheit
- 21: Verbindungssteg
- 22: Nabe
- 23: Blattfeder
- 24: Niete
- 25: Bügel
- 26: Fixieröffnung
- 27: Fixieröffnung
- 28: Fixieröffnung

- D: Drehrichtung
- ax: Achse

## Patentansprüche

1. Antriebsstrang,
- mit einer mit einem Motor zu verbindenden Eingangswelle (6),
- mit einem mit der Eingangswelle (6) verbundenen Schwungrad (7),
- mit einer mit einem Drehschwingungsdämpfer (8) verbundenen Kupplungsvorrichtung (12),
- mit einer mit der Kupplungsvorrichtung (12) verbundenen Ausgangswelle (4, 5),
- mit einem in dem Antriebsstrang zwischen dem Schwungrad (7) und dem Drehschwingungsdämpfer (8) vorgesehenen und im Wesentlichen drehfest mit dem Drehschwingungsdämpfer (8) verbundenen Abkoppelungselement (1) zur Dämpfung von Axialschwingungen und/oder Taumelschwingungen und/oder Radialschwingungen und/oder zur Kompensation von radialen Versätzen,
**dadurch gekennzeichnet, dass** das Abkoppelungselement (1) über eine axiale Bewegungen kompensierende Steckverzahnung (17) mit dem Drehschwingungsdämpfer (8) verbunden ist.

2. Antriebsstrang nach Anspruch 1,
**dadurch gekennzeichnet, dass** das Abkoppelungselement (1) im Wesentlichen scheiben- oder ringförmig ausgebildet ist.

3. Antriebsstrang nach Anspruch 2,
**dadurch gekennzeichnet, dass** die eingangsseitige Anbindung am Außenrand (2) der Scheibe oder des Rings (1) realisiert ist und die ausgangsseitige Anbindung am Innenrand (3) der Scheibe oder des Rings (1) realisiert ist.

4. Antriebsstrang nach einem der Ansprüche 1 bis 3,
**dadurch gekennzeichnet, dass** die Scheibe oder der Ring (1) mit dem Schwungrad (7) drehfest verbunden ist.

5. Antriebsstrang nach Anspruch 4,
**dadurch gekennzeichnet, dass** das Abkoppelungselement (1) mit dem Schwungrad (7) vernietet oder verschraubt ist.

6. Antriebsstrang nach einem der Ansprüche 1 bis 3,
**dadurch gekennzeichnet, dass** das Abkoppelungselement (1) mit dem Schwungrad (7) reibschlüssig verbunden ist.

7. Antriebsstrang nach Anspruch 6,
**dadurch gekennzeichnet, dass** das Abkoppelungselement (1) außenrandseitig gegen die Anpresskraft einer Feder, insbesondere einer Tellerfeder (16), reibschlüssig mit dem Schwungrad (7) verbunden ist.

8. Antriebsstrang nach einem der Ansprüche 1 bis 3,
**dadurch gekennzeichnet, dass** das Abkoppelungselement (1) federelastisch mit dem Schwungrad (7) verbunden ist.

## Claims

1. Drive train,
- having an input shaft (6) to be connected to a motor,
- having a flywheel (7) connected to the input shaft (6),
- having a coupling device (12) connected to a torsional vibration damper (8),
- having an output shaft (4, 5) connected to the coupling device (12),
- having a decoupling element (1) for damping axial vibrations and/or wobbling vibrations and/or radial vibrations and/or compensating radial offsets, which is provided in the drive train between the flywheel (7) and the torsional vibration damper (8) and connected in substantially torsion-resistant manner to the torsional vibration damper (8)
**characterised in that** the decoupling element (1) is connected to the torsional vibration damper (8) by way of a plug gearing (17) compensating axial movements.

2. Drive train according to Claim 1,
**characterised in that** the decoupling element (1) is of a substantially disc-shaped or annular construction.

3. Drive train according to Claim 2,
**characterised in that** the input-side connection is realised at the outer edge (2) of the disc or ring (1) and the output-side connection is realised at the inner edge (3) of the disc or ring (1).

4. Drive train according to one of Claims 1 to 3,
**characterised in that** the disc or ring (1) is connected in torsion-resistant manner to the flywheel (7).

5. Drive train according to Claim 4,
**characterised in that** the decoupling element (1) is riveted or screwed to the flywheel (7).

6. Drive train according to one of Claims 1 to 3,
**characterised in that** the decoupling element (1) is connected with friction fit to the flywheel (7).

7. Drive train according to Claim 6,
**characterised in that** the decoupling element (1) is connected with friction fit to the flywheel (7) on the outer-edge side in opposition to the pressure force of a spring, particularly a disc spring (16).

8. Drive train according to one of Claims 1 to 3,
**characterised in that** the decoupling element (1) is connected in resilient manner to the flywheel (7).

## Revendications

1. Ligne de transmission,
- avec un arbre d'entrée (6) à relier à un moteur,
- avec un volant (7) relié à l'arbre d'entrée (6),
- avec un dispositif d'embrayage (12) relié à un amortisseur de vibrations de torsion (8)
- avec un arbre de sortie (4, 5) relié au dispositif d'embrayage (12),
- avec un élément de découplage (1) prévu dans la ligne de transmission entre le volant (7) et l'amortisseur de vibrations de torsion (8) et essentiellement solidaire en rotation de l'amortisseur de vibrations de torsion (8) pour l'amortissement des vibrations axiales et/ou des vibrations de nutation et/ou des vibrations radiales et/ou pour la compensation de décalages radiaux,
**caractérisé en ce que** l'élément de découplage (1) est relié à l'amortisseur de vibrations de torsion (8) par une cannelure (17) compensant les mouvements axiaux.

2. Ligne de transmission selon la revendication 1,
**caractérisé en ce que** l'élément de découplage (1) est configurée en forme de disque ou d'anneau.

3. Ligne de transmission selon la revendication 2,
**caractérisé en ce que** le raccordement côté entrée est réalisé au bord extérieur (2) du,disque ou de l'anneau (1) et le raccordement côté sortie est réalisé au bord intérieur (3) du disque ou de l'anneau (1).

4. Ligne de transmission selon l'une des revendications 1 à 3,
**caractérisé en ce que** le disque ou l'anneau (1) est relié au volant (7) de manière solidaire en rotation.

5. Ligne de transmission selon la revendication 4,
**caractérisé en ce que** l'élément de découplage (1) est riveté ou boulonné avec le volant (7).

6. Ligne de transmission selon l'une des revendications 1 à 3,
**caractérisé en ce que** l'élément de découplage (1) est relié au volant (7) par friction.

7. Ligne de transmission selon la revendication 6,
**caractérisé en ce que** l'élément de découplage (1) est relié au volant (7) à son bord extérieur par friction à l'encontre de la force d'application d'un ressort, en particulier d'un ressort Belleville (16).

8. Ligne de transmission selon l'une des revendications 1 a 3,
**caractérisé en ce que** l'élément de découplage (1) est relié élastiquement au volant (7) à la manière d'un ressort.
